# EUROPÄISCHE PATENTSCHRIFT

(11) **EP 1 370 765 B1**
(45) Veröffentlichungstag und Bekanntmachung des Hinweises auf die Patenterteilung: **15.11.2006**
(21) Anmeldenummer: 02719676.5
(22) Anmeldetag: 14.03.2002
(51) Int. Cl.: F02M 61/14, F02M 51/06

(54) **BRENNSTOFFEINSPRITZVENTIL**
FUEL INJECTION VALVE
SOUPAPE D'INJECTION DE CARBURANT

(30) Priorität: 14.03.2001 DE 10112142
(43) Veröffentlichungstag der Anmeldung: 17.12.2003
(73) Patentinhaber: ROBERT BOSCH GMBH, 70442 Stuttgart (DE)
(72) Erfinder: HANS, Waldemar, 96050 Bamberg (DE)
(86) Internationale Anmeldenummer: PCT/DE2002/000910
(87) Internationale Veröffentlichungsnummer: WO 2002/073027

(56) Entgegenhaltungen:
- EP-A- 0 751 290
- US-A- 2 777 431

## Beschreibung

### Stand der Technik

Die Erfindung geht aus von einem Brennstoffeinspritzventil nach der Gattung des Hauptanspruchs.

Aus der DE 196 00 403 A1 ist beispielsweise ein elektromagnetisches Brennstoffeinspritzventil und eine dafür geeignete Befestigungsstruktur bekannt, mit denen für eine Brennkraftmaschine mit einem Zylinder-Einspritzsystem die Anforderungen an die Abdichtwirkung, die thermische Resistenz und die Druckresistenz erfüllt werden. Besondere Sorgfalt wird dabei auf die Abdichtung des Bereichs in, unmittelbarer Nachbarschaft zum Zylinder gerichtet, in dem das elektromagnetische Brennstoffeinspritzventil befestigt ist, wie auch auf einen davon weiter entfernten Bereich. Daraus resultiert, daß erfindungsgemäß ein erster Dichtabschnitt mit einem ersten Dichtungsring, der als gewellter Unterlegring ausgeführt ist, an einer Stelle nahe am Zylinder und zwischen dem Brennstoffeinspritzventil und dem Zylinderkopf liegt. Ferner ist ein zweiter Dichtabschnitt mit einem zweiten Dichtungsring, der ebenfalls als gewellter Unterlegring ausgeführt ist, an einer Stelle positioniert, die weiter vom Zylinder entfernt ist als der erste Dichtabschnitt.
Nachteilig an dem aus der DE 196 00 403 A1 bekannten Brennstoffeinspritzventil sind einerseits der Fertigungsaufwand sowie die bedingt durch veredelte Materialien, wie z. B. silberplattiertes INCONEL, hohen Produktionskosten für die Dichtringe.

Andererseits ist mit einer hohen Dichtwirkung auch immer ein hoher Montageaufwand verbunden, der große maschinelle Kräfte bei der Montage erfordert und Beschädigungen der Bauteile zur Folge haben kann.

Aus der EP 0 751 290 A1 ist bereits ein Brennstoffeinspritzventil zum direkten Einspritzen von Diesel-Brennstoff in den Brennraum einer gemischverdichtenden, selbstzündenden Brennkraftmaschine bekannt, das einen Düsenkörper als Ventilgehäuse aufweist. Am stromabwärtigen Ende des Brennstoffeinspritzventils ist ein Dichtring angeordnet, der eine konische Außenumfangsfläche besitzt. Das Brennstoffeinspritzventil ist in einen Hülsenkörper eingesetzt, der wiederum in einer Aufnahmebohrung des Zylinderkopfes eingepresst ist. Der Dichtring stützt sich mit seiner konischen Außenumfangsfläche an einem ebenfalls konisch verlaufenden Endabschnitt des Hülsenkörpers ab, so dass das Brennstoffeinspritzventil über den Hülsenkörper gegen den Zylinderkopf der Brennkraftmaschine abgedichtet ist. Der Dichtring verjüngt sich an seiner radial äußeren Seite in einer Strömungsrichtung des Brennstoffs konisch, während sich der Endabschnitt des Hülsenkörpers an seiner radial inneren Seite entgegen der Strömungsrichtung des Brennstoffs konisch verjüngt.

### Vorteile der Erfindung

Das erfindungsgemäße Brennstoffeinspritzventil mit den kennzeichnenden Merkmalen des Hauptanspruchs hat demgegenüber den Vorteil, daß eine Kombination von zwei Dichtringen, die sich entgegengesetzt zueinander konisch verjüngen und deren radiale Ausdehnung geringer ist als der Einbauraum, eine einfache, kraftsparende Montage und eine zuverlässige Dichtwirkung im fertig montierten Zustand ermöglicht.

Von Vorteil ist insbesondere, daß zugepaarte Beilagscheiben zulaufseitig und abströmseitig der Dichtringe eine gleichmäßige Kraftübertragung auf die Dichtringe erlauben.

Die Verwendung einer Beilagscheibe abströmseitig des Dichtrings ist besonders vorteilhaft, da durch diese Maßnahme ein zerstörerischer Kontakt zwischen dem Dichtring und den im Brennraum vorhandenen Gemischen weitgehend unterbunden werden kann. Von Vorteil ist weiterhin, daß die Dichtwirkung durch Beaufschlagung der Dichtringe über die abströmseitige Beilagscheibe während des Betriebs des Brennstoffeinspritzventils verstärkt wird.

Durch die in den Unteransprüchen aufgeführten Maßnahmen sind vorteilhafte Weiterbildungen des im Hauptanspruch angegebenen Brennstoffeinspritzventils möglich.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen schematischen Schnitt durch ein Ausführungsbeispiel eines erfindungsgemäßen Brennstoffeinspritzventils in einer Gesamtansicht, und
- Fig. 2A-B: einen schematischen Ausschnitt im Bereich II in Fig. 1 aus dem Ausführungsbeispiel des erfindungsgemäßen Brennstoffeinspritzventils in zwei aufeinanderfolgenden Montagezuständen.

### Beschreibung des Ausführungsbeispiels

Ein Brennstoffeinspritzventil 1 ist in der Form eines Brennstoffeinspritzventils für Brennstoffeinspritzanlagen von gemischverdichtenden, fremdgezündeten Brennkraftmaschinen ausgeführt. Das Brennstoffeinspritzventil 1 eignet sich zum direkten Einspritzen von Brennstoff in einen nicht dargestellten Brennraum einer Brennkraftmaschine.

Das Brennstoffeinspritzventil 1 besteht aus einem Düsenkörper 2, in welchem eine Ventilnadel 3 angeordnet ist. Die Ventilnadel 3 steht in Wirkverbindung mit einem Ventilschließkörper 4, der mit einer auf einem Ventilsitzkörper 5 angeordneten Ventilsitzfläche 6 zu einem Dichtsitz zusammenwirkt. Bei dem Brennstoffeinspritzventil 1 handelt es sich im Ausführungsbeispiel um ein nach innen öffnendes Brennstoffeinspritzventil 1, welches über eine Abspritzöffnung 7 verfügt.

Der Düsenkörper 2 ist durch eine Dichtung 8 gegen einen Außenpol 9 einer Magnetspule 10 sowie durch einen erfindungsgemäßen zweiteiligen Dichtring, der aus einem ersten Dichtring 34 und einem zweiten Dichtring 35 besteht, gegen einen Zylinderkopf . 36 der Brennkraftmaschine abgedichtet. Dabei verjüngt sich der erste Dichtring 34 konisch an einer radial äußeren Seite 45 in einer Strömungsrichtung des Brennstoffs, während der zweite Dichtring 35 sich an einer radial inneren Seite 46 konisch entgegen der Strömungsrichtung verjüngt. Die Dichtringe 34 und 35 bestehen vorzugsweise aus Teflon^{®}, um eine zuverlässige Dichtwirkung bei hoher Stabilität zu erzielen.

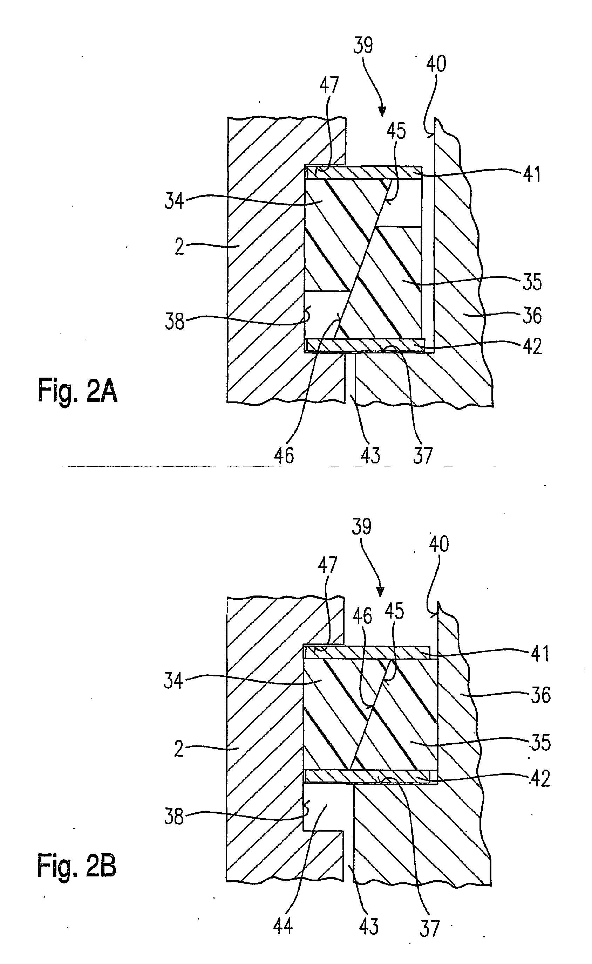

Das Brennstoffeinspritzventil 1 hat in dem Montagezustand gemäß Fig. 2A noch nicht seine endgültige Montageposition im Zylinderkopf 36 eingenommen. Sobald das Brennstoffeinspritzventil 1 weiter in eine Aufnahmebohrung 39 des Zylinderkopfes 36 eingepreßt wird, stellt sich durch eine axiale Verschiebung des ersten Dichtrings 34 in den zweiten Dichtring 35 und eine nachfolgende Aufweitung des letzteren die gewünschte Dichtwirkung.ein. Eine detaillierte Darstellung der Dichtringe 34 und 35 sowie ihrer Funktionsweise ist der Beschreibung der Fig. 2A und 2B zu entnehmen.

Die Magnetspule 10 ist in einem Spulengehäuse 11 gekapselt und auf einen Spulenträger 12 gewickelt, welcher an einem Innenpol 13 der Magnetspule 10 anliegt. Der Innenpol 13 und der Außenpol 9 sind durch einen Spalt 26 voneinander getrennt und stützen sich auf einem Verbindungsbauteil 29 ab. Die Magnetspule 10 wird über eine Leitung 19 von einem über einen elektrischen Steckkontakt 17 zuführbaren elektrischen Strom erregt. Der Steckkontakt 17 ist von einer Kunststoffummantelung 18 umgeben, die am Innenpol 13 angespritzt sein kann.

Die Ventilnadel 3 ist in einer Ventilnadelführung 14 geführt, welche scheibenförmig ausgeführt ist. Zur Hubeinstellung dient eine zugepaarte Einstellscheibe 15. An der anderen Seite der Einstellscheibe 15 befindet sich ein Anker 20. Dieser steht über einen ersten Flansch 21 kraftschlüssig mit der Ventilnadel 3 in Verbindung, welche durch eine Schweißnaht 22 mit dem ersten Flansch 21 verbunden ist. Auf dem ersten Flansch 21 stützt sich eine Rückstellfeder 23 ab, welche in der vorliegenden Bauform des Brennstoffeinspritzventils 1 durch eine Hülse 24 auf Vorspannung gebracht wird.

Abströmseitig des Ankers 20 ist ein zweiter Flansch 31 angeordnet, der als unterer Ankeranschlag dient. Er ist über eine Schweißnaht 33 kraftschlüssig mit der Ventilnadel 3 verbunden. Zwischen dem Anker 20 und dem zweiten Flansch 31 ist ein elastischer Zwischenring 32 zur Dämpfung von Ankerprellern beim Schließen des Brennstoffeinspritzventils 1 angeordnet.

In der Ventilnadelführung 14, im Anker 20 und am Ventilsitzkörper 5 verlaufen Brennstoffkanäle 30a bis 30c, die den Brennstoff, welcher über eine zentrale Brennstoffzufuhr 16 zugeführt und durch ein Filterelement 25 gefiltert wird, zur Abspritzöffnung 7 leiten. Das Brennstoffeinspritzventil 1 ist durch eine Dichtung 28 gegen eine nicht weiter dargestellte Verteilerleitung abgedichtet.

Im Ruhezustand des Brennstoffeinspritzventils 1 wird der erste Flansch 21 an der Ventilnadel 3 von der Rückstellfeder 23 entgegen seiner Hubrichtung so beaufschlagt, daß der Ventilschließkörper 4 am Ventilsitz 6 in dichtender Anlage gehalten wird. Der Anker 20 liegt auf dem Zwischenring 32 auf, der sich auf dem zweiten Flansch 31 abstützt. Bei Erregung der Magnetspule 10 baut diese ein Magnetfeld auf, welches den Anker 20 entgegen der Federkraft der Rückstellfeder 23 in Hubrichtung bewegt. Dabei nimmt der Anker 20 den ersten Flansch 21, welcher mit der Ventilnadel 3 verschweißt ist, und damit die Ventilnadel 3 ebenfalls in Hubrichtung mit. Der mit der Ventilnadel 3 in Wirkverbindung stehende Ventilschließkörper 4 hebt von der Ventilsitzfläche 6 ab, wodurch der über die Brennstoffkanäle 30a bis 30c. zur Abspritzöffnung 7 geführte Brennstoff abgespritzt wird.

Wird der Spulenstrom abgeschaltet, fällt der Anker 20 nach genügendem Abbau des Magnetfeldes durch den Druck der Rückstellfeder 23 auf den ersten Flansch 21 vom Innenpol 13 ab, wodurch sich die Ventilnadel 3 entgegen der Hubrichtung bewegt. Dadurch setzt der Ventilschließkörper 4 auf der Ventilsitzfläche 6 auf, und das Brennstoffeinspritzventil 1. wird geschlossen. Der Anker 20 setzt auf dem durch den zweiten Flansch 31 gebildeten Ankeranschlag auf.

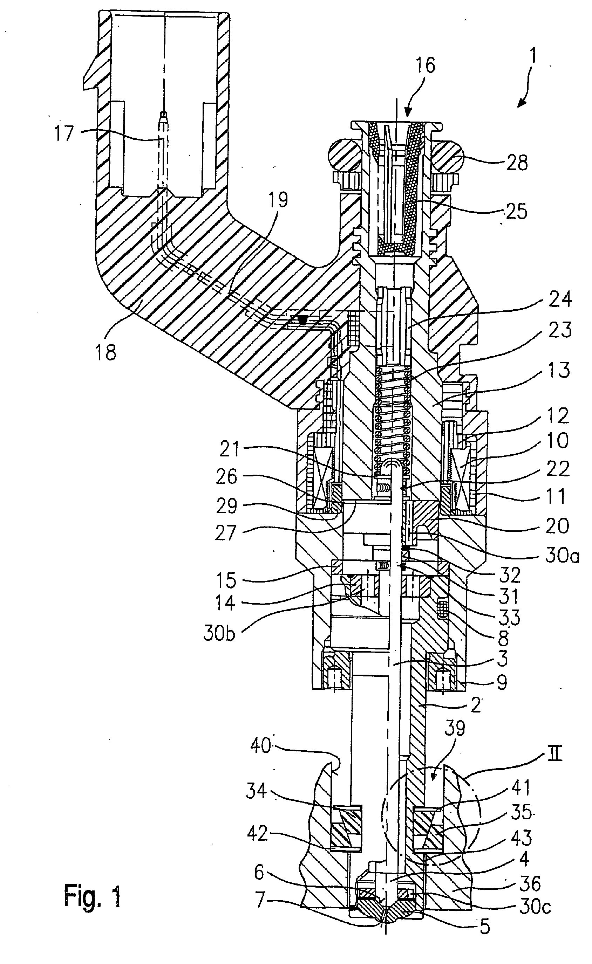

Fig. 2A und 2B zeigen in einer auszugsweisen Schnittdarstellung jeweils den in Fig. 1 mit II bezeichneten Ausschnitt aus dem erfindungsgemäß ausgestalteten Brennstoffeinspritzventil 1 in verschiedenen Montagezuständen. Übereinstimmende Bauteile sind in allen Figuren mit übereinstimmenden Bezugszeichen versehen.

Wie bereits in der Beschreibung der Fig. 1 erwähnt, sind die Dichtringe 34 und 35 in ihrer radialen Ausdehnung so ausgelegt, daß sie mit dem Brennstoffeinspritzventil 1 zunächst ohne Kraftaufwand in die Aufnahmebohrung 39 des Zylinderkopfes 36 einschiebbar sind. Zur Montage der Dichtringe 34 und 35 wird zunächst eine erste Beilagscheibe 41 in eine nutförmige Ausnehmung 38 des Düsenkörpers 2 eingelegt. Danach werden die Dichtringe 34 und 35 axial auf den Düsenkörper 2 aufgeschoben, bis sie ebenfalls in der Ausnehmung 38 angeordnet sind. Abschließend wird eine zweite Beilagscheibe 42 in die Ausnehmung 38 eingelegt.

Durch die besondere Form der Dichtringe 34 und 35, die sich entgegengesetzt zueinander konisch verjüngen, grenzen mit der radial äußeren Seite 45 des ersten Dichtrings 34 und der radial inneren Seite 46 des zweiten Dichtrings 35 zwei Kegelmantelflächen aneinander, so daß die Dichtringe 34 und 35 durch die Ausübung eines axialen Drucks ineinander verschiebbar sind. Dadurch kann der zweite Dichtring 35 unter geringem Kraftaufwand so aufgeweitet werden, daß die gewünschte Dichtwirkung in der Aufnahmebohrung 39 des Zylinderkopfes 36 erzielt wird. Der nötige Druck entsteht bei der Montage des Brennstoffeinspritzventils 1 in der Aufnahmebohrung 39 und wird über die erste Beilagscheibe 41 auf den ersten Dichtring 34 übertragen. Die erste Beilagscheibe 41 liegt dabei an einer zulaufseitigen Schulter 47 der Ausnehmung 38 des Düsenkörpers 2 an und wird durch den wirkenden Montagedruck in Abströmrichtung an den ersten Dichtring 34 gepreßt. Dieser wird durch den Druck in den zweiten Dichtring 35 geschoben und weitet diesen auf. Zusätzlich nimmt auch die radiale Ausdehnung des ersten Dichtrings 34 durch den herrschenden Druck und die beschränkten Freiheitsgrade unter. Verringerung der axialen Erstreckung zu. Dadurch kann sowohl die Dichtwirkung als auch die endgültige Einbauposition des Brennstoffeinspritzventils 1 in der Aufnahmebohrung 39 des Zylinderkopfes 36 erreicht werden.

Die auf einer Schulter 37 des Zylinderkopfes 36 aufliegende zweite Beilagscheibe 42 erfüllt dabei die Funktion eines Widerlagers, das den zweiten Dichtring 35 stützt und das Durchdrücken des ersten Dichtrings 34 in Abströmrichtung durch den zweiten Dichtring 35 verhindert. Zusätzlich kann durch die zweite Beilagscheibe 42 ein möglicherweise zerstörerischer Kontakt zwischen den im Brennraum vorhandenen und durch einen Spalt 43 in die Aufnahmebohrung 39 eindringenden Gemischen und dem Material der Dichtringe 34 und 35 unterbunden werden.

Da der Brennraumdruck brennraumseitig der Dichtringe 34 und 35 größer als der Umgebungsdruck brennraumabgewandt der Dichtringe 34 und 35 ist, wird der erste Dichtring 34 über den Spalt 43 zwischen dem Düsenkörper 2 und dem Zylinderkopf 36 mit Brennraumdruck beaufschlagt', so daß die Dichtwirkung während des Betriebes des Brennstoffeinspritzventils 1 durch Anpressen des ersten Dichtrings 34 über die erste Beilagscheibe 41 an die Schulter 47 des Düsenkörpers 2 verstärkt wird. Bedingt durch einen nach der Verpressung in der Ausnehmung 38 des Düsenkörpers 2 entstehenden Ringspalt 44 wird dieser Effekt noch zusätzlich verstärkt.

Die Erfindung ist nicht auf das dargestellte Ausführungsbeispiel beschränkt und auch für andere ineinander verschiebbare Formen von Dichtringen 34, 35, die konische, radiale Seiten aufweisen, sowie für beliebige Bauweisen von Brennstoffeinspritzventilen 1, beispielsweise für Brennstoffeinspritzventile 1 mit Anbindung an ein Common-Rail-System, anwendbar.

## Patentansprüche

1. Brennstoffeinspritzventil (I), insbesondere zum direkten Einspritzen von Brennstoff in den Brennraum einer gemischverdichtenden, fremdgezündeten Brennkraftmaschine, mit einem aus einem Düsenkörper (2) gebildeten Ventilgehäuse und einem ersten Dichtring (34), der das Brennstoffeinspritzventil (1) gegen einem Zylinderkopf (36) der Brennkraftmaschine abdichtet, wobei sich der erste Dichtring (34) an einer radial äußeren Seite (45) in einer Strömungsrichtung des Brennstoffs konisch verjüngt und mit einem zweiten Dichtring (35) sich berührend zusammenwirkt, der sich an einer radial inneren Seite (46) entgegen der Strömungsrichtung des Brennstoffs konisch verjüngt,
**dadurch gekennzeichnet,**
**dass** der erste Dichtring (34) und der zweite Dichtring (35) in einer Ausnehmung (38) des Düsenkörpers (2) angeordnet sind und eine erste Beilagscheibe (41, 42) in der Ausnehmung angeordnet ist.

2. Brennstoffeinspritzventil nach Anspruch 1,
**dadurch gekennzeichnet,**
**dass** die erste Beilagscheibe (41) zulaufseitig des ersten Dichtrings (34) angeordnet ist.

3. Brennstoffeinspritzventil nach Anspruch 2,
**dadurch gekennzeichnet,**
**dass** die erste Beilagscheibe (41) an einer Schulter (47) der Ausnehmung (38) anliegt.

4. Brennstoffeinspritzventil nach einem der Ansprüche 1 bis 3,
**dadurch gekennzeichnet,**
**dass** abströmseitig des zweiten Dichtrings (35) eine zweite Beilagscheibe (42) angeordnet ist.

5. Brennstoffeinspritzventil nach Anspruch 4,
**dadurch gekennzeichnet,**
**dass** die zweite Beilagscheibe (42) an einer Schulter (37) des Zylinderkopfes (36) anliegt.

6. Brennstoffeinspritzventil nach einem der Ansprüche 1 bis 5,
**dadurch gekennzeichnet,**
**dass** der erste Dichtring (34) in dem zweiten Dichtring (35) axial verschiebbar ist.

7. Brennstoffeinspritzventil nach Anspruch 6,
**dadurch gekennzeichnet,**
**dass** eine axiale Verschiebung der Dichtringe (34, 35) gegeneinander eine radiale Verbreiterung des ersten Dichtrings (34) und des zweiten Dichtrings (35) zur Folge hat.

## Claims

1. Fuel injection valve (1), in particular for the direct injection of fuel into the combustion chamber of a mixture-compressing, spark-ignition internal combustion engine, having a valve housing which is formed from a nozzle body (2), and a first sealing ring (34) which seals the fuel injection valve (1) with respect to a cylinder head (36) of the internal combustion engine, the first sealing ring (34) tapering conically on a radially outer side (45) in a flow direction of the fuel and interacting by contact with a second sealing ring (35) which tapers conically on a radially inner side (46) counter to the flow direction of the fuel, **characterized in that** the first sealing ring (34) and the second sealing ring (35) are arranged in a recess (38) of the nozzle body (2), and a first shim (41, 42) is arranged in the recess.

2. Fuel injection valve according to Claim 1,
**characterized in that** the first shim (41) is arranged on the feed side of the first sealing ring (34).

3. Fuel injection valve according to Claim 2,
**characterized in that** the first shim (41) bears against a shoulder (47) of the recess (38).

4. Fuel injection valve according to one of Claims 1 to 3, **characterized in that** a second shim (42) is arranged on the outflow side of the second sealing ring (35) .

5. Fuel injection valve according to Claim 4,
**characterized in that** the second shim (42) bears against a shoulder (37) of the cylinder head (36).

6. Fuel injection valve according to one of Claims 1 to 5, **characterized in that** the first sealing ring (34) is axially displaceable in the second sealing ring (35) .

7. Fuel injection valve according to Claim 6,
**characterized in that** an axial displacement of the sealing rings (34, 35) against one another has the consequence of a radial widening of the first sealing ring (34) and the second sealing ring (35).

## Revendications

1. Injecteur de carburant (1), notamment pour l'injection directe de carburant dans la chambre de combustion d'un moteur à combustion interne à allumage externe et à compression de mélange, ayant un boîtier de soupape formé à partir d'un corps de buse (2) et une première bague d'étanchéité (34) qui rend étanche l'injecteur de carburant (1) envers une culasse (36) d'un moteur à combustion interne, la première bague d'étanchéité (34) se rétrécissant en forme de cône sur un côté extérieur radial (45) dans la direction d'écoulement du carburant et agissant par contact avec une deuxième bague d'étanchéité (35) qui se rétrécit en forme de cône sur un côté intérieur radial (46) dans la direction opposée de l'écoulement,
**caractérisée en ce que**
la première bague d'étanchéité (34) et la deuxième bague d'étanchéité (35) sont disposées dans un évidement (38) du corps de buse (2) et une première rondelle de serrage (41, 42) est disposée dans l'évidement.

2. Injecteur de carburant selon la revendication 1
**caractérisée par**
une première rondelle de serrage (41) disposée côté arrivée de la première bague d'étanchéité (34).

3. Injecteur de carburant selon la revendication 2,
**caractérisée en ce que**
la première rondelle de serrage (41) est disposée sur un épaulement (47) de l'évidement (38).

4. Injecteur de carburant selon l'une des revendications 1 à 3,
**caractérisée par**
une deuxième rondelle de serrage (42) placée côté écoulement de la deuxième bague d'étanchéité (35).

5. Injecteur de carburant selon la revendication 4,
**caractérisée en ce que**
la deuxième rondelle de serrage (42) est posée contre un épaulement (37) de la culasse (36).

6. Injecteur de carburant selon l'une des revendications 1 à 5,
**caractérisée en ce que**
la première bague d'étanchéité (34) peut être déplacée axialement dans la deuxième bague d'étanchéité (35).

7. Injecteur de carburant selon la revendication 6,
**caractérisée en ce qu'**
un déplacement axial des bagues d'étanchéité (34, 35) l'une contre l'autre a pour conséquence un élargissement radial de la première bague d'étanchéité (34) et de la deuxième bague d'étanchéité (35).
